# NEUE EUROPÄISCHE PATENTSCHRIFT

(11) **EP 0 833 864 B2**
(45) Veröffentlichungstag und Bekanntmachung des Hinweises auf die Entscheidung über den Einspruch: **10.08.2005**
(45) Hinweis auf die Patenterteilung: 16.08.2001
(21) Anmeldenummer: 96920831.3
(22) Anmeldetag: 19.06.1996
(51) Int. Cl.: C08L 25/08, C09J 125/08, C09D 125/08

(54) **MASSE ZUM KLEBEN, DICHTEN UND BESCHICHTEN**
GLUING, SEALING AND COATING COMPOUND
MATERIAU DE COLLAGE, D'ETANCHEITE ET DE REVETEMENT

(30) Priorität: 22.06.1995 DE 19522749
(43) Veröffentlichungstag der Anmeldung: 08.04.1998
(73) Patentinhaber: Henkel Kommanditgesellschaft auf Aktien, 40589 Düsseldorf (DE)
(72) Erfinder: WINDHÖVEL, Udo, D-40789 Monheim (DE); URBATH, Hartmut, D-42389 Wuppertal (DE); LOTH, Helmuth, D-45131 Essen (DE); KLAUCK, Wolfgang, D-40670 Meerbusch (DE); KLEIN, Johann, D-40233 Düsseldorf (DE); BÖGE, Kai, D-40217 Düsseldorf (DE)
(86) Internationale Anmeldenummer: PCT/EP1996/002655
(87) Internationale Veröffentlichungsnummer: WO 1997/000912

(56) Entgegenhaltungen:
- EP-A- 0 127 056
- EP-A- 0 127 057
- EP-A- 0 268 169
- EP-A- 0 309 114
- WO-A-92/02583
- WO-A-94/24202
- DE-A- 1 669 052
- DE-A- 3 203 488
- FR-A- 1 177 808
- GB-A- 781 900
- US-A- 2 353 228
- US-A- 2 718 509
- US-A- 3 267 174
- US-A- 3 689 532
- US-A- 4 265 796
- US-A- 4 505 618
- US-A- 4 845 149
- US-A- 5 284 894

## Beschreibung

Die Erfindung betrifft die Verwendung der Masse auf der Basis eines Copolymerisats von Styrol mit mindestens einem weiteren Comonomeren und eines Polyalkylenoxids als Weichmacher.

Derartige Massen sind bekannt. So wird in der US 4,869,934 eine Zusammensetzung zum Glätten, Reinigen und Beschichten von Fußböden beschrieben, die zum Beispiel aus folgenden Bestandteilen besteht: 31,2 Gew.-Teile eines Copolymerisates aus Butylmethacrylat, Methacrylsäure, Methylmethacrylat und Styrol im Verhältnis 10 : 18 : 52 : 20, 1,6 Gew.-Teile des permanenten Weichmachers (BuOCH₂CH₂O)3PO und 7,0 Gew.-Teile des flüchtigen Weichmachers Me(OC₃H₆)₂OH sowie ca. 48 Gew.-Teile Wasser. Diese bekannte Zusammensetzung hat den Nachteil, daß zumindest die flüchtigen Weichmacher die Umwelt belasten oder gar giftig sind.

In der technischen Information TI/ED 1115 d-1 der BASF vom Januar 1984 wird das Produkt "Plastilit 3060" beschrieben. Dabei handelt es sich um Polypropylenglykol-alkylphenylether, welcher als Weichmacher für Polymerdispersionen eingesetzt wird, insbesondere für Polyacrylate. Als Polymerisate werden konkret genannt: ein Copolyrnersat von Styrol und Butylacrylat sowie ein Copolymerisat von Ethylacrylat, Ethylhexylacrylat und Acrylnitril. Derartige Zusammensetzungen können z.B. als Dichtungsmassen mit schneller Hautbildung nach dem Applizieren, mit geringerem Nachhärten und mit besserem Dehnverhalten bei tiefen Temperaturen verwendet werden. Außerdem ergeben sie mit Füllstoffen pastöse Fliesenklebstoffe, die gute Haftzugfestigkeiten bei hoher Elastizität aufweisen. Der Weichmacherwirkt elastifizierend auf das Copolymerisat, ohne die Wasseraufnahme des Filmes merklich zu verschlechtern. So steigt die Dehnung eines Filmes nahezu linear von ca. 300 % auf 4 000 % bei Zusatz von 9 % Weichmacher. Zur biologischen Wirkung des Weichmachers wird gesagt, daß er nach den vorliegenden Informationen keine gesundheltsschädlichen Wirkungen habe, wohl seien aber bei längerer Einwirkung Haut- und Schleimhautreizungen möglich. Weitere Nachteile sind: Die Viskosität der Dispersion wird durch den Zusatz von Plastillt 3060 erheblich erhöht. Dadurch wird die Zugabe von Füllstoffen stark eingeschränkt. Außerdem ist es kaum möglich, andere Weichmacher zusätzlich zuzugeben.

Die gleichen Nachteile gelten auch für die beiden folgenden Druckschriften. In der polnischen Patentschrift PL 119091 wird ein nicht toxischer und nicht entflammbarer Klebstoff für Keramik und Kunststoffe beschrieben, der neben einer Acrylat/Styrol-Dispersion Polypropylenglykol-alkylphenylether, Füllstoffe und organische. Lösungsmittel sowie Wasser enthält.

In der deutschen Patentschrift DE 36 38 224 wird ein elastisches Dichtungsmaterial beschrieben, weiches einen Styrol/Butadien-Gummi, ein α-Methylstyrolpolymerisat, Lösungsmittel wie Kohlenwasserstoffe und aromatische Kohlenwasserstoffe sowie Polypropylenglykol-alkylphenylether enthält.

In der tschechischen Patentschrift CS 259825 wird ein Haftklebstoff für Etiketten und Bänder beschrieben, welche hauptsächlich ein Copolymerisat aus Acrylaten, ungesättigten Carbonsäuren sowie gegebenenfalls Styrol, Alkylstyrol oder Vinylacetat enthält. Weitere Komponenten sind organische Lösungsmittel, Weichmacher wie z.B. Polyethylenglykol und Polypropylenglykol.

### Einschub Seite 3a

Ausgehend von diesem Stand der Technik bestand die erfindungsgemäße Aufgabe darin, eine toxisch unbedenkliche Zusammensetzung aus einem Styrol-Copolymerisat und einem aromatenfreie Weichmacher bereitzustellen, welche als Bindemittel geeignet ist und eine akzeptable Haftung ergibt.

Die erfindungsgemäße Lösung ist den Patentansprüchen zu entnehmen. Sie besteht in der Verwendung der Masse auf der Basis eines Copolymerisates von Styrol mit mindestens einem weiteren Comonomeren und eines Polyalkylenoxids, wobei das Styrol-Copolymerisat bezogen auf die Monomeren insgesamt mehr als 30, insbesondere mehr als 60 Gew.-% und maximal 98, insbesondere 85 Gew.-%. Styrol enthält und der Weichmacher ein aromatenfreies Polyalkylenoxid und/oder dessen fetichemisches Derivat ist und wobei die Masse kein potentiell wärme-härlbares Harz enthält, das durch Kondensation von Formaldehyd mit einem Phenol, Harnstoff oder Triazin gebildet wurde, zur Herstellung von Klebstoffen, Dichtungsmassen.

Comonomere des Styrols bzw. Methylstyrols sind insbesondere: Acrylate und Methacrylate mit 1 bis 12 C-Atomen In der Alkoholkomponente, insbesondere mit 2 bis 8 C-Atomen. Die Acrylsäureester können auch reaktive Gruppen für eine spätere Nachvernetzung enthalten. Weitere Comonomere können sein: Vinylealer, Maleinsäureester, Ethylen, Acrylamid, Acrylsäure, Butadien, Acrylnitril, und zwar sowohl einzeln als auch im Gemisch. Aus den obigen Monomeren werden vorzugsweise statistische Copolymerisate mit einem Molekulargewicht von über 100 000 g/mol (Gelchromatographie)hergestellt. Handelsübliche Styrol-Copolymerisate sind: Acronal 290 D, Scopacryl D 343, Ubatol VAF 1539, Acronal S 360 D, Scopacryl PAA D 8875, Acronal S 400, Acronal S 401, Styrolan A 900, Rhodopas DS 913, Joncryl 678, Vinnapas LL 6010 und SAF 54, Neocryl A 621 (Copolymere aus Styrol, Acrylsäureester). Pliotec LS 1 (Terpolymer aus Styrol, Butylacrylat, Methacrylsäure), Mowilith DM 611, Mowilith DM 880, Buna EM 2116, Styrolux 684 D, Rhodopas SB 012, (Copolymere aus Styrol, Butadien), Novodur P2M, Synthomer VL 10286 (Terpolymere aus Styrol, Butadien und Acrylnitril).

Die Styrol-Copolymerisate können nach bekannten Verfahren hergestellt werden, insbesondere durch Emulsions- oder Perlpolymerisation. Dabei entstehen wäßrige Dispersionen mit einer Konzentration von ca. 40 bis 70 Gew.-% an Styrol-Copolymerisat. Ihre Herstellung in Masse oder Lösung ist aber ebenfalls möglich.

Unter einem Polyalkylenoxid ist ein Polyether der allgemeinen Formel X(R-O-)ₙH zu verstehen. R kann eine oder mehrere - vorzugsweise eine - der folgenden Gruppen sein: Ethylen-, Propylen- oder Tetramethylen-Gruppe. n liegt im Bereich von 2 bis 30 insbesondere 4 bis 20. X ist ein aromatenfreies StartMolekül mit 1 bis 12, insbesondere 1 bis 6 funktionellen Gruppen. Bevorzugte Polyalkylenoxide sind Polyethylenglykol und Polypropylenglykol. Aber auch Polybutylenglykole sind möglich. Es können auch Blockcopolymere aus Polyethylenglykol und Polypropylenglykol verwendet werden. Die endständigen OH-Gruppen können auch vollständig oder partiell verestert (z.B. mit Fettsäuren oder Dicarbonsäuren) oder verethert sein. Das Molekulargewicht (osmotisches Zahlenmittel) liegt vorzugsweise unter 5 000, insbesondere unter 2 500 und vor allem unter 1 500. Handelsübliche Polyalkylenoxide sind: Polypropylenglykole 420, 620 und 2020 (Hüls AG), Pluronic-Typen (BASF), Voranole (Dow) und Polyglykole (Hoechst).

In der DE 1669052 wird ein Überzugspräparat beschrieben, welches 1. aus einem Mischpolymerisat aus einem Alkylacrylat und α,β-olefinisch ungesättigten Carbonsäuren mit 1 bis 10 Kohlenstoffatomen sowie gegebenenfalls zusätzlich aus α,β-olefinisch ungesättigten Nitrilen und aromatischen Monovinyl-Kohlenwasserstoff-Verbindungen mit 8 bis 11 Kohlenstoffatomen besteht und 2. aus einem reaktionsfähigen Addukt eines Triols mit Alkylenoxid sowie 3. aus einem wärme-härtbaren Harz, weiches durch Kondensation von Formaldehyd mit,Phenol, Harnstoff oder Triazin gebildet wurde. Durch Vernetzung dieser Komponenten 1) und 2) mit 3) durch Aushärten bei 250 bis 350°C entsteht ein Überzug, wie er, bei Lackierungen von Kraftfahrzeugen und Instrumenten erwünscht ist. Eine Verwendung, ohne das wärmehärtbare Harz wird nicht beschrieben.

In der DE 3203488 wird eine thermoplastische Formmasse zur Herstellung von Formteilen beschrieben, die A) aus einem Copolymerisat aus wenigstens einem vinylaromatischen Monomeren und wenigstens einem ethylenisch ungesättigten Monomeren sowie B) aus einem Polyalkylen-Polyether und C) aus 0,5 bis 5 Gew.-%, bezogen auf A + B + C, eines Copolymerisats aus Styrol und wenigstens einem weiteren monomeren Baustein besteht, der mindestens eine Carbonsäurefunktion aufweist. Von einer Verwendung zur Herstellung von Klebstoffen, Dichtungsmassen und Beschichtungsmassen ist keine Rede.

In der US 2718509 wird eine Zusammensetzung aus einem weichgemachten Harz zur Oberflächenbeschichtung beschrieben. Es enthält ein Polystyrol und Polyoxypropylenglykol als Weichmacher. Von Copolymeren des Styrols ist keine Rede.

Die Polyalkylenoxide werden in der Regel durch Polyaddition von Ethylenoxid und/oder Propylenoxid an Wasser, Ethylenglykol, Propylenglykol, polyfunktionelle Alkohole wie Glycerin, Polyglycerin, Trimethylolpropan, Pentaerythrit, Sorbit, Glucose, Polysaccharide, Ammoniak, Triethanolamin, Carbonsäuren etc.. hergestellt.

Als Startmolekül für diese Polyaddition eignen sich zweckmäßigerweise auch Fettstoffe mit funktionellen Gruppen, die mit Ethylenoxid oder Propylenoxid reagieren. Diese Fettstoffe enthalten durchschnittlich 1 bis 10, bevorzugt 1,5 bis 6,0, mindestens einer der folgenden funktionellen Gruppen: -OH, -SH, -NH₂, -COOH oder Säureanhydrid- bzw. Oxid-Gruppen in Gegenwart von Wasser.

Es können aber auch Fettstoffe ohne funktionelle Gruppe verwendet werden. Dann müssen jedoch für die Reaktion katalytische Mengen von Wasser; Alkoholen oder Carbonsäuren zugegeben werden.

Umsetzungen von funktionalisierten Fettderivaten wie epoxidiertern Sojaöl oder Triglycerid/MSA-Addukten mit Polyalkylenoxiden führen ebenfalls zu den erfindungsgemäß zu verwendenden Produkten.

Unter "Fettstoffen" sind Fettsäuren, Fettalkohole und deren Derivate zu verstehen, wenn sie mindestens eine der obengenannten funktionellen Gruppen enthalten. Im allgemeinen ist ihr Molekulargewicht größer als 100, insbesondere größer als 200. Die obere Grenze ist 20 000, vorzugsweise 300 bis 1 500. Der Gewichtsanteil des Polyethers an dem Umsetzungsprodukt von Ethylenoxid bzw. Propylenoxid mit dem Fettstoff beträgt 1 : 0,01 bis 3, vorzugsweise 1 : 0,1 bis 2.

Unter "Fettsäuren" werden Säuren verstanden, die eine oder mehrere Carboxyl-Gruppen (-COOH) enthalten. Die Carboxyl-Gruppen können mit gesättigten, ungesättigten, unverzweigten oder verzweigten Alkyl-Resten mit mehr als 8, insbesondere mehr als 12 C-Atomen verbunden sein. Sie können neben den oben beschriebenen -OH, -SH, -C = C-, -COOH, Amino-, Säureanhydrid-Gruppen oder Epoxidgruppen weitere Gruppen wie Ether-, Ester-, Halogen-, Amid-, Amino-, Urethan- und Harnstoffgruppen enthalten. Bevorzugt werden jedoch Carbonsäuren wie native Fettsäuren oder Fettsäuregemische, Dimerfettsäuren und Trimerfettsäuren. Konkrete Beispiele für die Fettsäuren sind neben den gesättigten insbesondere die ein- oder mehrfach ungesättigten Säuren Palmitolein-, Öl-, Elaidin-, Petroselin-, Eruca-, Ricinol-, Hydroxymethoxystearin-, 12-Hydroxystearin-, Linol-, Linolen- und Gadoleinsäure.

Neben den in der Natur vorkommenden Fettsäuren können auch Polyhydroxylettsäuren eingesetzt werden. Diese können z.B. durch Epoxidation ungesättigter Fette und Öle oder Ester von Fettsäuren mit Alkoholen, Ringöffnung mit H-aktiven Verbindungen wie z.B. Alkoholen, Aminen und Carbonsäuren und anschließende Verseifung hergestellt werden. Die als Ausgangsmaterial benötigten Fette oder Öle können sowohl pflanzlichen als auch tierischen Ursprungs sein oder gegebenenfalls gezielt auf petrochemischem Weg synthetisiert werden.

Die Fettsäuren können auch von Öl- und Fett-basierten Rohstoffen abgeleitet sein, wie sie z.B. durch En-Reaktionen, Diels-Alder-Reaktionen, Umesterungen, Kondensationsreaktionen, Pfropfung (z.B. mit Maleinsäureanhydrid oder Acrylsäure usw.) und Epoxidierungen zugänglich sind. Als Beispiele hierfür seien genannt: a) Epoxide ungesättigter Fettsäuren wie Palmitolein-, Öl-, Elaidin-, Petroselin-, Eruca-, Linol-, Linolen, Gadoleinsäure, b) Umsetzungsprodukte ungesättigter Fettsäuren mit Maleinsäure, Maleinsäureanhydrid, Methacrylsäure oder Acrylsäure, c) Kondensationsprodukte von Hydroxycarbonsäuren wie Ricinolsäure oder 12-Hydroxystearinsäure und Polyhydroxycarbonsäuren.

Nicht alle der oben beschriebenen Fettsäuren sind bei Raumtemperatur stabil. Falls notwendig, können daher für die erfindungsgemäße Verwendung Derivate der obengenannten Fettsäuren wie Ester oder Amide eingesetzt werden.

In einerbevorzugten Ausführungsform der Erfindung werden Esteroder Partialester der obengenannten Fettsäuren mit ein- oder mehrwertigen Alkoholen verwendet. Unter "Alkoholen" sind Hydroxyl-Derivate von aliphatischen und alicyclischen gesättigten, ungesättigten, unverzweigten oder verzweigten Kohlenwasserstoffen zu verstehen. Hierzu gehören neben einwertigen Alkoholen auch die aus der Polyurethan-Chemie an sich bekannten niedermolekularen Kettenverlängerungsmittel bzw. Vemetzer mit Hydroxylgruppen. Konkrete Beispiele aus dem niedermolekularen Bereich sind Methanol, Ethanol, Propanol, Butanol, Pentanol, Decanol, Octadecanol, 2-Ethylhexanol, 2-Octanol, Ethylenglykol, Propylenglykol, Trimethylenglykol, Tetramethylenglykol, Butylenglykol-2,3, Hexamethylendiol, Octamethylendiol, Neopentylglykol, 1,4-Bishydroxymethylcyclohexan, Guerbetalkohol, 2-Methyl-1,3-Propandiol, Hexantriol-(1,2,6), Glycerin, Trimethylolpropan, Trimethylolethan, Pentaerythrit, Sorbit, Formit, Methylglycosid, Butylenglykol, die zu Alkoholen reduzierten Dimer- und Trimer-Fettsäuren. Von Kollophoniumharzen abgeleitete Alkohole wie Abietylalkohol können ebenfalls für die Veresterung verwendet werden.

Anstelle der Alkohole können auch OH-haltige tertiäre Amine, Polyglycerin oder teilweise hydrolysierte Polyvinylester verwendet werden.

Außerdem können zur Oligomerisierung Polycarbonsäuren oder Hydroxycarbonsäuren zugestzt werden. Beispiele hierfür sind Oxalsäure, Malonsäure, Bernsteinsäure, Maleinsäure, Fumarsäure, Glutarsäure, Adipinsäure, Korksäure; Sebacinsäure, 1,11-Undecandisäure, 1,12-Dodecandisäure, oder Dimerfettsäure, Trimerfettsäure, Zitronensäure, Milchsäure, Weinsäure, Ricinolsäure, 12-Hydroxystearinsäure. Bevorzugt wird Adipinsäure verwendet.

Beispiele für geeignete Ester sind neben den teilweise verseiften Fetten, wie Glycerinmonostearat, vorzugsweise die natürlichen Fette und Öle von Raps (neu), Sonnenblumen, Soja, Lein, Ricinus, Kokosnüssen, Ölpalmen, Ölpalmkernen und Ölbäumen und deren Methylester. Bevorzugte Fette und Öle sind z.B. Rindertalg mit einer Kettenverteilung von 67 % Ölsäure, 2 % Stearinsäure, 1 % Heptadecansäure, 10 % gesättigte Säuren der Kettenlänge C12 bis C16, 12 % Linolsäure und 2 % gesättigte Säuren mit > C18 Kohlenstoffatomen oder z.B. das Öl der neuen Sonnenblume (NSb) mit einer Zusammensetzung von ca. 80 % Ölsäure, 5 % Stearinsäure, 8 % Linolsäure und ca. 7 % Palmitinsäure. Selbstverständlich können z.B. auch die entsprechenden Epoxide und Umsetzungsprodukte mit Maleinsäureanhydrid verwendet werden. Weitere Beispiele sind partiell und vollständig dehydratisiertes Ricinöl, partiell acetyliertes Ricinusöl, Ringöffnungsprodukte von epoxydiertem Sojaöl mit Dimerfettsäure.

Außerdem können Fettsäureester und ihre über Epoxidation zugänglichen Derivate verwendet werden. Als Beispiel für derartige Ester seien genannt: Sojafettsäuremethylester, Leinölfettsäuremethylester, Ricinolsäuremethylester, Epoxystearinsäuremethylester, Epoxystearinsäure-2-ethylhexylester. Von den Glyceriden werden die Triglyceride bevorzugt, z.B. Rüböl, Leinöl, Sojaöl, Ricinusöl, partiell und vollständig dehydratisierte Ricinusöle, partiell acetyliertes Ricinusöl, Sojaölepoxid, Leinölepoxid, Rübölepoxid, epoxidiertes Sonnenblumenöl.

Vorzugsweise werden mit Nucleophilen ringgeöffnete epoxidierte Triglyceride ungesättigter Fettsäuren eingesetzt werden. Unter Nucleophilen sind Alkohole wie z.B. Methanol, Ethanol, Ethylenglykol, Glycerin oder Trimethylolpropan, Amine wie z.B. Ethanolamin, Diethanolamin, Triethanolamin, Ethylendiamin oder Hexamethylendiamin oder Carbonsäuren wie z.B. Essigsäure, Dimerfettsäure, Maleinsäure, Phthalsäure oder ein Gemisch von Fettsäuren mit 6 bis 36 C-Atomen zu verstehen.

Die Fette und Öle (Triglyceride) können sowohl in nativer Form als auch nach thermischer und/oder oxidativer Behandlung bzw. die über Epoxidation oder über die Addition von Maleinsäureanhydrid bzw. Acrylsäure zugänglichen Derivate eingesetzt werden. Konkrete Beispiele sind: Palmöl, Erdnußöl, Rüböl, Baumwollsaatöl, Sojaöl, Ricinusöl, partiell und vollständig dehy-dratisierte Ricinusöle, partiell acetylierte Ricinusöle, Sonnenblumenöl, Leinöl, Standöle, geblasene Öle, epoxidiertes Sojaöl, epoxidiertes Leinöl, Rapsöl, Kokosöl, Palmkernöl und Talge.

Als Derivate können auch Amide der obengenannten Fettsäuren verwendet werden. Diese können durch Umsetzung mit primären und sekundären Aminen oder Polyaminen erhalten werden, z.B. mit Monoethanolamin, Diethanolamin, Ethylendiamin, Hexamethylendiamin, Ammoniak, müssen jedoch noch nucleophile Gruppen enthalten für die Umsetzung mit den Alkylenoxiden.

Unter "Fettalkoholen" werden Verbindungen verstanden, die eine oder mehrere Hydroxylgruppen enthalten. Die Hydroxylgruppen können mit gesättigten, ungesättigten, unverzweigten oder verzweigten Alkylresten mit mehr als 8, insbesondere mehr als 12 C-Atomen verbunden sein. Sie können neben den für die spätere Umsetzung mit den Alkylenoxiden notwendigen -SH, -C = C-, -COOH, Amino, Säureanhydrid-Gruppen oder Epoxidgruppen weitere Gruppen enthalten, z.B. Ether-, Ester-, Halogen-, Amid-, Amino-, Harnstoff- und Urethan-Gruppen. Konkrete Beispiele für die erfindungsgemäßen Fettalkohole sind: Ricinoleylalkohol, 12-Hydroxystearylalkohol, Oleylalkohol, Erucylalkohol, Linoleylalkohol, Linolenylalkohol, Arachidylalkohol, Gadoleylalkohol, Erucylalkohol, Brassidylalkohol, Dimerdiol (= Hydrierungsprodukt des Dimerfettsäuremethylesters).

Als Derivate der Fettalkohole können symmetrische und unsymmetrische Ether und Ester mit Mono- und Polycarbonsäuren eingesetzt werden. Unter Monocarbonsäuren versteht man Ameisen-, Essig-, Propion-, Butter-, Valerian-, Capron-, Önanth-, Capryl-, Pelargon-, Caprin-, Undecan-, Laurin-, Tridecan-, Myristin-, Pentadecan-, Palmltin-, Margarin-, Stearin-, Nonadecan-, Arachin-, Behen-, Lignocerin-, Cerotin- und Melissinsäure. Polycarbonsäuren sind z.B. Oxalsäure, Adipinsäure, Maleinsäure, Weinsäure und Zitronensäure. Gleichzeitig können als Carbonsäure auch die oben beschriebenen Fettsäuren eingesetzt werden, wie z. B. Ölsäureoleylester.

Die Fettalkohole können auch verethert sein, insbesondere mit mehrwertigen Alkoholen, z.B. Alkylpolyglykoside, Dimerdiolether. Natürlich können auch Gemische obiger Fettstoffe als Startmoleküle für die Umsetzung mit den Alkylenoxiden verwendet werden.

Das Gewichtsverhältnis des Styrol-Copolymerisats zu dem fettchemischen Derivat des Polyalkylenglykol beträgt 100 : 2,5 bis 40 und vor allem 100 : 20 bis 40.

Die erfindungsgemäß zu verwendenden Massen können neben diesen beiden wesentlichen Komponenten noch weitere Stoffe enthalten, z.B. Antioxidantien, Pigmente, Füllstoffe, Weichmacher, Konservierungsmittel, Entschäumer, Filmbildehilfsmittel, Geruchsstoffe, Wasser, Haftvermittler, Lösungsmittel, Farbstoffe, Flammschutzmittel, Verlaufshilfsmittel, Harze, Tackifier, Viskositätsregulatoren, Dispergierhilfsmittel (z.B. Na- oder Ammoniumsalz von Polyacrylsäure), Emulgatoren (z.B. Alkyletherphosphate und Sulfosuccinate) und Verdickungsmittel (z.B. MC, HEG).

Als Harze kommen in Frage: Polyisobutylen bzw. Polybutylen (z.B. Hyvis 10 der BP), Kollophoniumharze und seine Derivate (Ester, hydrierte Produkte, Abietylalkohol), Acrylatharze, Phenolharze, Terpen-Phenolharze, Polyterpene, Epoxidharze, Kohlenwasserstoffharze, Inden-Kumaronharze und Melaminharze.

Als Antioxidantien kommen in Frage: z.B. phosphorige Säure und deren Salze, unterphosphorige Säure und deren Salze, Ascorbinsäure und deren Derivate (spez. Ascorbylpalmitat); Tocopherol und dessen Derivate, Mischungen von Ascorbinsäure-Derivaten und Tocopherol-Derivaten, sterisch gehinderte Phenolderivate, speziell BHA (tert.-Butyl-4-methoxyphenol) und BHT (2,6-DI-tert.-butyl-4-methylphenol), Gallussäure und Derivate, spez. Alkylgallate, aromatische Amine, wie z.B. Diphenylamin, Naphthylamin und 1,4-Phenylendiamin, Dihydrochinolin, organische Sulfide und Polysulfide, Dithiocarbamate und Mercaptobenzimidazol.

Als Viskositätsregulatoren kommen in Frage: z.B. Celluloseether, gehärtetes Ricinusöl und hochdisperse Kieselsäuren.

Als Füllstoffe bzw. Pigmente kommen in Frage: Kreide, Schwerspat, Kaolin, Ruß, Gips, Aerosil, Kieselgel, Kaoline, Talkum, Graphit, Metalloxide von Aluminium, Eisen, Zink, Titan, Chrom, Kobalt, Nickel, Mangan etc., gegebenenfalls als Mischoxide, Chromate, Molybdate, Carbonate, Silikate, Aluminate, Sulfate, native Fasern, Cellulose, Holzspäne, Phthalocyanine und Quarzmehl.

Als zusätzliche Weichmacher außer den erfindungsgemäß zu verwendenden Weichmachern kommen in Frage: fettchemische Weichmacher ohne Polyalkylenoxid-Bestandteile, insbesondere Fettsäuremethylester, Fettsäureester mit anderen Alkoholen, Triglyceride. Die Gewichtsteile der Zusätze richten sich nach dem angestrebten Einsatzzweck.
Es können im allgemeinen die gleichen Fettstoffe als zusätzliche Weichmacher verwendet werden, wie sie oben als Ausgangsstoffe zur Herstellung von fettchemischen Derivaten von Polyalkylenoxiden beschrieben wurden. Eine reaktive Gruppe ist allerdings nicht mehr notwendig. Sie kann z.B. durch Umsetzung mit einem monofunktionellen Alkohol oder einer Carbonsäure mit 1 bis 4 C-Atomen desaktiviert sein.

Die erfindungsgemäß zu verwendende Masse wird folgendermaßen aus den Ausgangsstoffen hergestellt: Die Zugabe des erfindungsgemäß zu verwendenden Weichmachers zum Copolymer bzw. zur Copolymerdispersion kann nach, während oder vor der Polymerisation erfolgen. Die Formulierungen werden in der Regel so hergestellt, daß das Polymer bzw. die Polymerdispersion vorgelegt wird. Dann werden die anderen Bestandteile unter Rühren (ggf. unter erhöhter Temperatur) zugegeben. Vorzugsweise werden Copolymer-Dispersionen eingesetzt.

Die erfindungsgemäß zu verwendenden Weichmacher können in der Regel folgende Veränderungen an dem Styrolcopolymerisat bewirken:
- Die Glasumwandlungstemperatur wird herabgesetzt.
- Das Copolymerisat wird haftklebrig.
- Die Viskosität wird teilweise erhöht, teilweise verringert.
- Die Bruchdehnung wird drastisch erhöht..
- Die Dehnung bei der maximalen Kraft wird ebenfalls stark erhöht, was auf ein gummielastisches Verhalten hindeutet.

Von besonderer Bedeutung ist aber, daß diese Effekte permanent sind, d.h. ein Auswandern des Weichmachers wurde innerhalb von 3 Wochen bei 60 °C nicht beobachtet. Dafür spricht folgende Versuchsdurchführung: Die Filme wurden 3 Wochen bei 60 °C zwischen Silikonpapier gelagert und im Abstand von 3 Tagen bezüglich Verfleckung des Papiers beurteilt.

Besonders wirksam ist z.B. Polypropylenglykol mit einem Molekulargewicht von ca. 600 g/mol. Es verringert die Viskosität von Styrol/Butylacrylat-Copolymerisat von 7 500 auf 1 700 bei einer Zugabe von 15 Gew.-%. Die Bedingungen waren: 100 Gew.-Teile von Acronal 290 D wurden mit 15 Gew.-Teilen Polypropylenglykol 620 (Hüls AG) in einem Becherglas bei 60 °C innerhalb von 30 Min. gemischt, bis die Dispersion homogen aussah. Auch die Bruchdehnung wird auf mehr als 12 000 % angehoben. Die TG wird auf -35 °C gesenkt. Weitere erfindungsgemäß zu verwendende Weichmacher mit besonderer Bedeutung sind: Pentaglycerin x 20 EO x 50 PO, TMP x 12 PO und ein Umsetzungsprodukt von epoxidiertern Sojaöl mit Vorlauffettsäure umgesetzt mit 20 Gew.-% Ethylenoxid. Sie haben folgende besondere Wirkung: Auch sie senken in bestimmter Konzentration die Viskosität der Dispersion und die Glasumwandlungstemperatur. Außerdem bewirken auch sie ein gummielastisches Verhalten des Polymerfilms.

Aufgrund dieser Eigenschaften eignen sich die erfindungsgemäß zu verwendenden Zusammensetzungen als Bindemittel zur Konfektionierung von Klebstoffen, und Dichtungsmassen.

Als Klebstoffe seien konkret genannt: Schmelz-, Lösungsmittel-, Dispersions-, Montage-, Haft- und Kontakt-Klebstoffe sowie Redispersionspulver, Alleskleber und Klebestifte. Zu verkleben sind damit: Papier, Pappe, Holz, Textilien, Wandbeläge, Fliesen, Etiketten, Leder, Gummi, Kunststoffe, Glas, Keramik und Metall. Die Dichtungsmassen können sowohl im Bau- als auch im Fahrzeugbereich eingesetzt werden. Die erfindungsgemäß zu verwendende Masse kann auch hydraulischen Bindemitteln zugesetzt werden, z.B. Zement oder Gips.

Je nach Art und Menge des Weichmachers, sowie in Abhängigkeit von der allgemeinen Zusammensetzung wird ein Klebstoff mit unterschiedlichen Eigenschaften, z.B. unterschiedliche Viskosität, insbesondere unterschiedlicher Klebkraft erhalten. So verhindert z.B. eine Zusammensetzung aus 80 Gew.-% Acronal 290 D und 20 Gew.-% Polypropylenglykol 600 ein Verrutschen von Fußbodenbelägen, insbesondere von selbstliegenden Teppichfliesen mit textiler Rückseite oder einer Rückenbeschichtung aus Bitumen, PVC oder ataktischem Polypropylen auf bauüblichen Untergründen. Bei dem Untergrund kann es sich um Estrich, z.B. Zement- oder Anhydritestrich oder um Holz- bzw. Spanplatten, sowie um metallische Untergründe handeln. Diese können unbehandelt oder grundiert sowie mit einer Ausgleichmasse oder Beschichtung auf Zement-, Polyurethan-, Epoxidharz- oder Dispersionsbasis vorbehandelt sein.

Folgende Zusammensetzung hat nicht nur einen Antirutscheffekt, sondern fixiert den Bodenbelag mit höherer, aber begrenzter Festigkeit auf obengenannten Untergründen so, daß er leicht wieder entfembar ist:
30 Gew.-% Acronal 290 D,
5 Gew.-% Polypropylenglykol 600,
5 Gew.-% Dispergierhilfsmittel, Emulgator, Entschäumer, Verdicker;
15 Gew.-% Kolophoniummethylester,
15 Gew.-% Wasser,
30 Gew.-% Kreide.

Der Fußbodenbelag kann in Bahnen oder Fliesen, sowie aus PVC oder textilem Material sein. Insbesondere kann es sich um CV-Beläge (cushioned vinyls) und Textilbeläge mit Latex- oder PUR-Schaumrücken, mit textilem Rücken oder mit Verfestigungsstrich handeln.

Die Herstellung beider Zusammensetzungen erfolgt durch Einrühren der weiteren Rohstoffe in der genannten Reihenfolge in die Dispersion bei einer Temperatur von 15 bis 50 °C, insbesondere 15 bis 30 °C.

Folgende Zusammensetzung führt zu einer festen Verklebung des Fußbodenbelags auf obengenannten Untergründen:
35 Gew.-% Acronal 290 D,
37 Gew.-% Kreide,
20 Gew.-% einer 80%igen Lösung von Balsamharz in Diethylenglykolmonobutylether,
5 Gew.-% Polypropylenglykol 600 und
3 Gew.-% Dispergierhilfsmittel, Emulgator, Entschäumer, Verdicker.
Der zu verklebende Fußbodenbelag kann ein PVC-, CV-, Linoleum- oder Textilbelag mit unterschiedlicher Rückenausstattung sowie ein heterogener Belag mit textiler oder PVC-Rückseite sein.

Die Herstellung der Zusammensetzung erfolgt nach folgender Arbeitsvorschrift: In die Dispersion werden Polypropylenglykol 600, Dispergierhilfsmittel, Emulgator, Entschäumer und Verdicker bei 15 bis 30 °C eingerührt. Dann wird die 50 bis 90 °C bevorzugt 70 bis 80 °C warme Balsamharzlösung kontinuierlich zugegeben und die Mischung durch ausreichendes Nachrühren homogenisiert. Anschließend wird der Füllstoff unter Rühren eingemischt und solange gerührt, bis die Mischung klumpenfrei und homogen ist.

Zur Herstellung einer Fugendichtungsmasse muß die TG des Styrol-Copolymerisats unter -10 °C liegen, vorzugsweise unter -20 °C. Außerdem muß die Dispersion trotz des hohen Gehaltes an Füllstoff einen glatten Film bilden. Eine brauchbare Dichtungsmasse hat zum Beispiel folgende Zusammensetzung: 34 Gew.-% Acronal 290 D, 1 % Rapsmethylester, 5 % Polypropylenglykol 600 und 60 % Kreide. Diese Dispersion ist pastenförmig und läßt sich gut verstreichen. Der daraus hergestellte Film ist elastisch und zeigt eine hohes Rückstellvermögen, Diese Zusammensetzung ist daher als Fugendichtungsmasse geeignet.

### Beispiele

### I. Ausgangsstoffe

1. Acronal 290 D = 50%lge wäßrige Dispersion eines Styrol/Butylacrylat-Copolymeren (anionisch),
2. PPG 620 = Polympropylenglykol mit MG = ~ 600,
3. PPG 2020 = Polypropylenglykol mit Mg = ~2 000,
4. A = Umsetzungsprodukt eines Fettalkohols (mit 12 bis 14 C-Atomen) mit Ethylenoxid im Molverhältnis 1 : 3,
5. B = Umsetzungsprodukt von Ricinusöl mit Ethylenoxid im Molverhältnis 1 : 20,
6. C = Polypropylenglykol-alkylphenylether (Plastillt 3060),
7. D = Umsetzungsprodukt von epoxidiertern Sojaöl mit Vorlauffettsäure, um gesetzt mit 20 Gew.-% Ethylenoxid, z.B. entsprechend folgender Vorschrift:

In einem Autoklaven werden 4 000 g Sojapolyol 85 mit 12,5 g einer 50%igen wäßrigen KOH gemischt. Zur Entfernung des Wassers wird 20 Min. bei 90 °C bei < 40 mbar evakuiert. Dann wird mit insgesamt 1 000 g Ethylenoxid bei 160 °C umgesetzt. Die Nachreaktionszeit beträgt 30 Min., Nach Abkühlung auf 90 °C werden 11,1 g einer 90%igen Milchsäure zugesetzt. Die OHZ beträgt 94, die SZ 0,4.

### II. Herstellung der Massen

100 Gew.-Teile von Acronal 290 D wurden mit den in der Tabelle angegebenen Mengen an Polyalkylenglykolen in einem Becherglas bei 60 °C innerhalb von 30 Min. gemischt, bis die Dispersion homogen aussah.

### III.Untersuchung der Massen

Die untersuchten Proben wurden folgendermaßen hergestellt: Die modifizierten Dispersionen wurden in Formen bei 40 °C in einem Brutschrank verfilmt, 7 Tage im Normklima (23 °C, 50 % LF) gelagert und dann vermessen.

Die Feststoff-Konzentration (FK) wurde folgendermaßen bestimmt: 5 bis 10 g der Probe werden in einer Aluschale 2 Stunden bei 120 bis 130 °C erhitzt. Dann wird zurückgewogen. Die Viskosität (Visk) wurde folgendermaßen bestimmt: Brookfield RVT (20 °C).

Die Reißdehnung (Dehnung) wurde unter folgenden Bedingungen bestimmt: Instron 4302, automatisches Materialprüfsystem Serie IX, Probenbreite 5 mm, Probendicke 1 mm, Probenlänge 15 mm, Zuggeschwindigkeit 200 mm/Min..

Die Verträglichkeit der Komponenten (Schwitzen) wurde folgendermaßen bestimmt: Die Filme wurden bei 60 °C zwischen Silikonpapier gelagert und nach 3 Wochen bezüglich Verfleckung des Papiers beurteilt.

Die Glasumwandlungs-Temperatur (TG) wurde folgendermaßen bestimmt: Meßzelle DSC 910 mit DuPont 2100, Al-Tiegel mit Deckel, 3 l/h N2, 20 K/Min.

Die Haftklebrigkeit (RK) wurde folgendermaßen bestimmt: Eine Stahlkugel (Durchmesser 20 mm, Gewicht 32,25 g) rollte eine Rampe (Höhe 26 mm, Laufstrecke 115 mm) auf einen Film der erfindungsgemäßen Zusammensetzung) hinunter. Die auf dem Polymerfilm zurückgelegte Strecke wurde gemessen (Angabe in mm).

Die einzelnen Ergebnisse wurden in der Tabelle zusammengefaßt. Sie zeigen:
- Die aliphatischen Weichmacher sind mit den aromatischen Copolymeren verträglich (kein Schwitzen).
- Die Glasumwandlungstemperatur wird stark verringert. Es werden Werte unter -10 °C und sogar unter -20 °C erhalten.
- Die Massen wurden bei ca. 10%igen Zusatz haftklebrig.
- In der Regel steigt die Viskosität stark an. Sie kann aber auch gleich bleiben oder gar abnehmen.
- Die Reißdehnung steigt an, teilweise sehr stark.

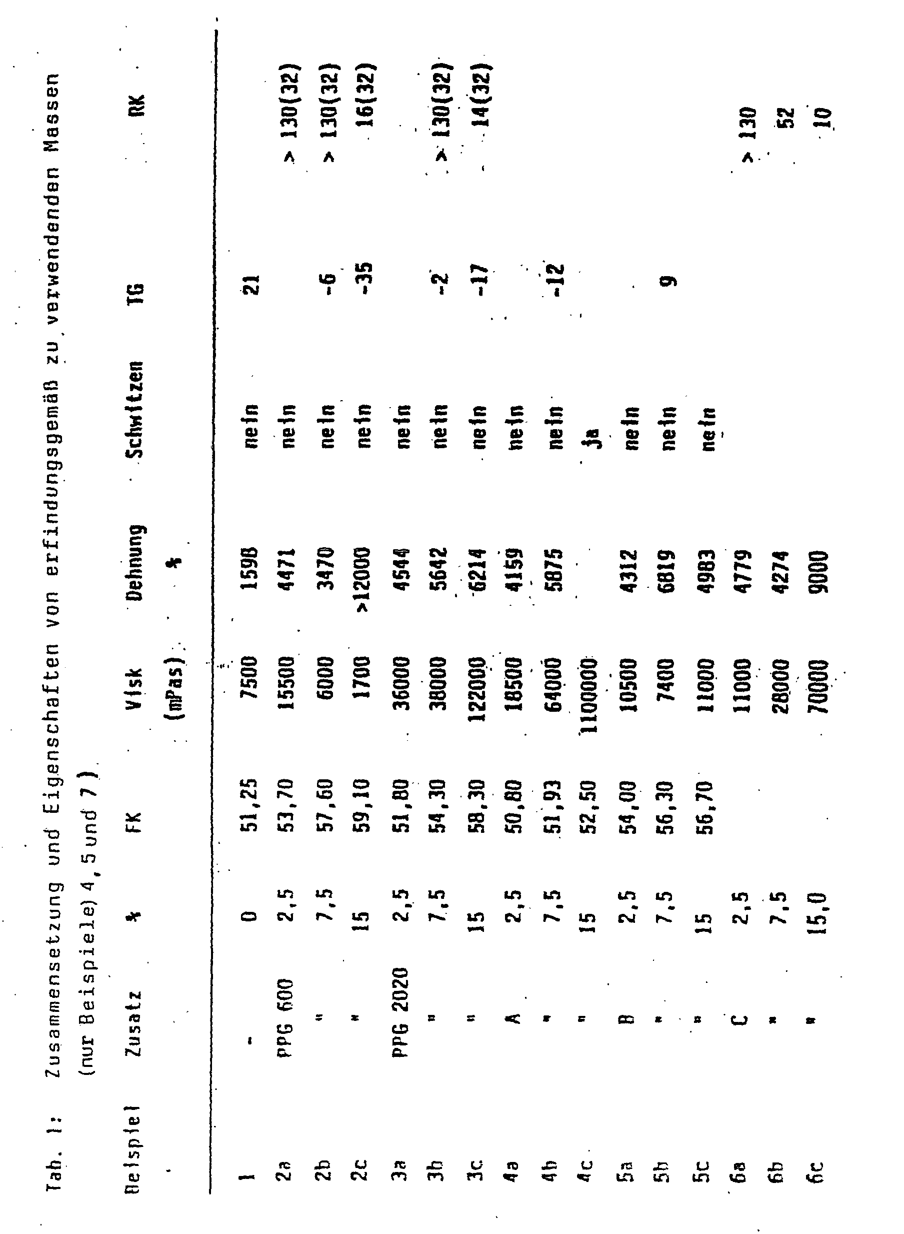

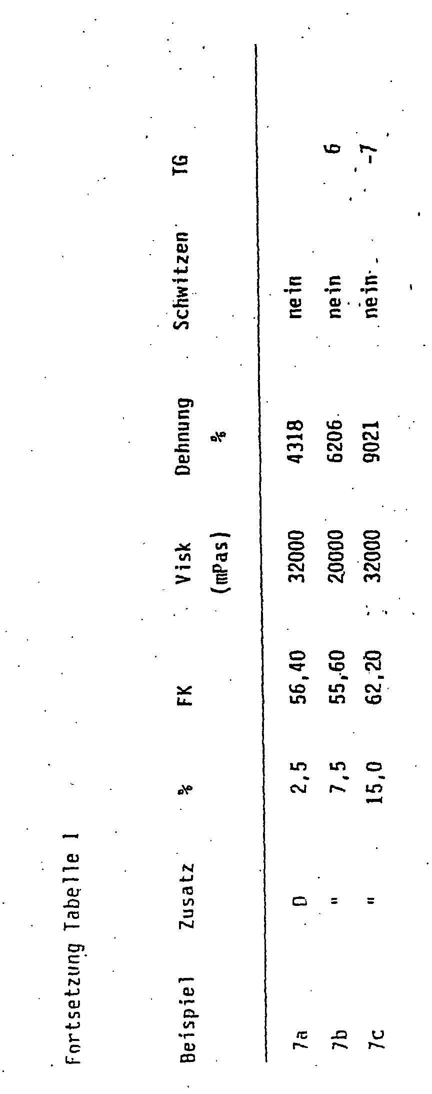

## Patentansprüche

1. Verwendung der Masse auf der Basis eines Copolymerisates von Styrol mit mindestens einem weiteren Comonomeren und eines Polyalkylenoxids, wobei das Styrol-Copolymerisat mehr als 30 Gew.-%, bezogen auf das Styrol-Copolymerisat Styrol enthält und der Weichmacher ein aromatenfreies Polyalkylenoxid und/oder dessen fettchemisches Derivat ist, wobei auf 100 Gew.-% Teile Styrol-Copolymerisat 2,5 bis 40 Teile fettchemisches Derivat kommen und wobei die Masse kein potentiell wärme-härtbares Harz enthält, das durch Kondensation von Formaldehyd mit einem Phenol, Harnstoff oder Triazin gebildet wurde, zur Herstellung von Klebstoffen, und Dichtungsmassen.

2. Verwendung nach Anspruch 1, **dadurch gekennzeichnet, daß** die Masse zusätzlich einen fettchemischen Weichmacher ohne Umsetzung mit einem Alkylenoxid enthält.

3. Verwendung nach Anspruch 1, **dadurch gekennzeichnet, daß** das Polyalkylenoxid ein Homo- oder Copolymeres von Ethylenoxid, Propylenoxid oder Butylenoxid ist, insbesondere ein Blockcopolymer, und **dadurch** daß das fettchemische Derivat des Polyalkylenoxids ein Umsetzungsprodukt eines Fettstoffes mit Ethylen-, Propylen- oder Butylenoxid ist.

4. Verwendung nach mindestens einem der Ansprüche 1 bis 3, **dadurch gekennzeichnet, daß** das Polyalkylenoxid und/oder dessen fettchemisches Derivat ein Molekulargewicht von mehr als 400, insbesondere mehr als 600 und vor allem mehr als 1 000 hat.

5. Verfahren zur Herstellung der Masse nach mindestens einem der Ansprüche 1 bis 4, **dadurch gekennzeichnet, daß** man den Weichmacher einer wäßrigen Dispersion des Styrol-Copolymerisates zumischt.

6. Verwendung der Massen nach mindestens einem der Ansprüche 1 bis 5 zur Herstellung von Klebstoffen und Dichtungsmassen.

7. Verwendung nach Anspruch 6, **dadurch gekennzeichnet, daß** die Klebstoffe zur Befestigung von Fußbodenbelägen dienen.

8. Verwendung nach Anspruch 6, **dadurch gekennzeichnet, daß** die Dichtungsmasse als Fugendichtungsmasse verwendet wird.

## Claims

1. The use of a compound based on a copolymer of styrene with at least one other comonomer and a polyalkylene oxide, the styrene copolymer containing more than 30% by weight of styrene, based on the styrene copolymer, and the plasticizer being a non-aromatic polyalkylene oxide and/or an oleochemical derivative thereof, 2.5 to 40 parts oleochemical derivative being used to 100 parts by weight styrene copolymer, and the compound not containing any potentially heat-curable resin formed by condensation of formaldehyde with a phenol, urea or triazine, for the production of adhesives and sealing compounds.

2. The use claimed in claim 1, **characterized in that** the compound additionally contains an oleochemical plasticizer which is not reacted with an alkylene oxide.

3. The use claimed in claim 1, **characterized in that** the polyalkylene oxide is a homopolymer or copolymer of ethylene oxide, propylene oxide or butylene oxide, more particularly a block copolymer, and **in that** the oleochemical derivative of the polyalkylene oxide is a reaction product of a fatty compound with ethylene, propylene or butylene oxide.

4. The use claimed in at least one of claims 1 to 3, **characterized in that** the polyalkylene oxide and/or the oleochemical derivative thereof has a molecular weight of more than 400, more particularly more than 600 and above all more than 1,000.

5. A process for producing the compound claimed in at least one of claims 1 to 4, **characterized in that** the plasticizer is added to an aqueous dispersion of the styrene copolymer.

6. The use of the compounds claimed in at least one of claims 1 to 5 for the production of adhesives and sealing compounds.

7. The use claimed in claim 6, **characterized in that** the adhesives are used for laying floor coverings.

8. The use claimed in claim 6, **characterized in that** the sealing compound is used as a joint sealing compound.

## Revendications

1. Utilisation d'un matériau à base d'un copolymère de styrène avec au moins un autre comonomère, et d'un polyoxyalkylène, dans lequel le copolymère de styrène contient, plus de 30 % en poids de styrène rapporté au copolymère, et le plastifiant est un polyoxyalkylène exempt de composant aromatique et/ou un dérivé gras de celui-ci, sur 100 parties en poids du copolymère de styrène 2,5 à 40 parties viennent du dérivé gras, et le matériau ne contient aucune résine potentiellement thermodurcissable qui a été formée par condensation de formaldéhyde avec un phénol, l'urée ou la triazine, pour la fabrication de colles et de matières d'étanchéité.

2. Utilisation selon la revendication 1,
**caractérisée en ce que**
le matériau contient en outre un plastifiant gras, sans réaction avec un oxyde d'alkylène.

3. Utilisation selon la revendication 1,
**caractérisée en ce que**
le polyoxyalkylène est un homo- ou copolymère d'oxyde d'éthylène, oxyde de propylène ou oxyde de butylène, en particulier un copolymère séquencé, et par conséquent le dérivé gras du polyoxyalkylène est un produit de réaction d'une matière grasse avec l'oxyde d'éthylène, de propylène ou de butylène.

4. Utilisation selon au moins l'une des revendications 1 à 3,
**caractérisée en ce que**
le polyoxyalkylène et/ou son dérivé gras a(ont) une masse moléculaire de plus de 400, en particulier de plus de 600 et plus particulièrement de plus de 1 000.

5. Procédé pour la préparation du matériau selon au moins l'une des revendications 1 à 4,
**caractérisé en ce qu'**
on ajoute le plastifiant à une dispersion aqueuse du copolymère de styrène.

6. Utilisation des matériaux selon au moins l'une des revendications 1 à 4,
pour la fabrication de colles et de matières d'étanchéité.

7. Utilisation selon la revendication 6,
**caractérisée en ce que**
les colles servent à la consolidation de revêtements de sol.

8. Utilisation selon la revendication 6,
**caractérisée en ce que**
la matière d'étanchéité est utilisée comme matière d'étanchéification de joints.
